# FASCICULE DE BREVET EUROPEEN

(11) **EP 3 505 807 B1**
(45) Date de publication et mention de la délivrance du brevet: **28.04.2021**
(21) Numéro de dépôt: 18248069.9
(22) Date de dépôt: 27.12.2018
(51) Int. Cl.: F16L 59/15, F24H 1/10, F24D 19/00, F28F 19/00, F28D 20/02

(54) **INSTALLATION HYDRAULIQUE DE CHAUFFAGE A PROTECTION CAPACITIVE CONTRE LE GEL**
HYDRAULISCHEANORDNUNG MIT FROSTSCHUTZMITTELN
HYDRAULIC INSTALLATION FOR A HEATING SYSTEM WITH ANTI-FREEZING MEANS

(30) Priorité: 29.12.2017 FR 1763411
(43) Date de publication de la demande: 03.07.2019
(73) Titulaire: Société Industrielle de Chauffage (SIC), 59660 Merville (FR)
(72) Inventeur: SAISSET, Luc, 38460 Villemoirieu (FR); CLEMENT, Jean-Francis, 85000 La Roche-sur-Yon (FR); FONTBONNE, Erwan, 69670 VAUGNERAY (FR); ANTOINE, Emmanuel, 59270 BAILLEUL (FR)
(74) Mandataire: Ipsilon

(56) Documents cités:
- EP-A2- 1 036 976
- FR-A1- 2 761 386
- US-A- 4 590 108
- US-A- 4 599 992
- US-A1- 2017 175 946

## Description

L'invention concerne une installation hydraulique de chauffage. En particulier, l'invention concerne une installation hydraulique de chauffage conforme au préambule de la revendication 1, et telle que divulguée par le document US 4,599,992 A.

On connait des installations hydrauliques de chauffage dans lesquelles de l'eau est en mouvement ou au repos telles que des tuyaux, des cuves, des réservoirs, des ballons..-

Ces installations terrestres hors sol ou dans la zone cryotique du sol peuvent être exposées au gel selon les lieux où elles sont implantées. C'est le cas pour les installations qui sont implantées à l'extérieur des locaux et également pour les installations qui sont implantées dans des locaux non chauffés en période hivernale, lorsque les conditions d'apparition du gel sont réunies.

On rencontre généralement ce type de problème dans les installations liées au secteur du bâtiment et dans les installations équipant ou en relation avec les habitations.

Pour remédier au problème du gel plusieurs solutions sont envisageables, parmi lesquelles :
- l'ajout d'une ou de plusieurs substances chimiques (antigel) dans l'eau de l'installation afin de diminuer la température de solidification du mélange eau- substance(s) chimique(s) ;
- le chauffage par résistance électrique de l'eau dans l'installation ;
- la mise en circulation de l'eau dans l'installation lorsque cela est possible ;
- la mise en place d'une isolation thermique dont l'épaisseur est conditionnée par la durée de protection souhaitée (par exemple, pour assurer une protection de 72 heures contre le gel on prévoit une épaisseur d'isolant de 150 mm autour d'un tuyau de 20 mm de diamètre véhiculant de l'eau à 30°C avec une température d'air environnant de -10°C).

Bien que satisfaisantes, ces solutions présentent toutefois certains inconvénients :
- l'ajout d'une ou de plusieurs substances chimiques (antigel) dans l'eau de l'installation peut provoquer la formation de boues organiques ou minérales, des réactions chimiques avec les constituants de l'installation en cas de dilution abusive du mélange par un utilisateur, une augmentation de la viscosité du mélange dans l'installation et donc une baisse notable des performances lorsque l'eau de l'installation est supposée être mise en circulation ;
- en l'absence accidentelle d'alimentation électrique (ex : coupure de courant) le chauffage de l'eau par résistance électrique ne peut plus avoir lieu et la mise en circulation de l'eau dans l'installation, par exemple par une pompe, n'est plus possible ;
- une isolation thermique efficace s'accompagne d'une épaisseur d'isolant importante qui induit un encombrement élevé, ce qui s'avère problématique lorsque les contraintes d'encombrement sont élevées (par exemple lorsque les tuyaux sont proches des parois) et ce qui complique la mise en place de l'installation dotée d'une telle isolation lorsque les tuyaux ou liaisons hydrauliques reliant entre elles des parties de l'installation doivent traverser des parois.

L'invention prévoit de remédier à au moins un des inconvénients précités en proposant une installation hydraulique de chauffage comprenant:
- au moins un composant contenant de l'eau ou dans lequel de l'eau est mise en circulation, ledit au moins un composant étant situé dans une zone susceptible d'être exposée au gel et étant hors sol ou dans la zone cryotique du sol,
- au moins un système de sécurité fonctionnant à partir d'une alimentation électrique et qui est configuré pour s'enclencher et donc empêcher le gel de l'eau dans ledit au moins un composant lorsque la température de ladite est inférieure à un premier seuil de température prédéterminé,
caractérisée en ce que ledit au moins un composant est entouré au moins partiellement par un matériau à changement de phase ayant une température de solidification supérieure à celle de l'eau contenue dans ledit au moins un composant de manière à retarder le gel de l'eau dans ledit au moins un composant, d'une part, lorsque la température de ladite zone est inférieure à un deuxième seuil de température prédéterminé qui est supérieur à la température de solidification de l'eau et inférieur ou égal à la température de solidification dudit matériau à changement de phase et, d'autre part, lorsque le système de sécurité est défaillant et lorsque l'installation est arrêtée ou défaillante.

La présence de cette couche de matériau à changement de phase permet de ralentir le phénomène d'apparition du gel dans l'eau contenue dans ledit au moins un composant (système de protection contre le gel). En effet, lorsque la température du milieu ambiant baisse et atteint la température de solidification de ce matériau, celui-ci voit sa température rester constante jusqu'à ce que toute sa masse ait changé d'état et que l'énergie de changement d'état dégagée ait été absorbée par le milieu ambiant à son contact. Les conséquences de ce changement d'état permettent ainsi de retarder la baisse de la température et, par-là, le gel de l'eau dans ledit au moins un composant pendant une durée qui dépend notamment du matériau utilisé et de l'épaisseur de ce matériau. Toute détérioration du composant due au gel (par exemple un tuyau qui se fend) est ainsi évitée pendant une certaine durée qui, normalement, est supérieure à celle nécessaire pour que l'installation redémarre (après un arrêt d'exploitation de l'installation) ou que le système de sécurité soit à nouveau opérationnel (rétablissement du courant électrique par exemple).

Par comparaison avec un isolant thermique conventionnellement utilisé pour isoler un composant d'une installation, le système de protection selon l'invention agit sur le court terme là où l'isolant constitue une protection à long terme.

On notera que l'eau dans l'installation est rarement de l'eau pure et peut le plus souvent être considérée comme une solution aqueuse car il peut notamment s'agir d'eau provenant d'un réseau d'eau de ville ou d'eaux mortes qui sont des généralement des eaux avec des additifs divers.

Compte tenu de la physique de solidification du matériau à changement de phase, lorsque celui-ci commence à se solidifier le flux de déperdition thermique va être bloqué pendant une durée limitée qui dépend de l'épaisseur du matériau. Au bout de ce temps limité l'eau commence à geler car la barrière de protection n'agit plus.

Au contraire, avec un isolant thermique de l'art antérieur le flux est transmis mais en étant atténué en fonction de la résistance thermique de l'isolant. L'épaisseur de l'isolant doit être typiquement 2, 3 ou 4 fois supérieure à celle du matériau à changement de phase (MCP) dans les mêmes conditions opératoires, ce qui augmente considérablement l'encombrement.

A titre d'exemple, avec un isolant thermique classique, éviter le gel pendant 72 heures d'une canalisation de 20 mm de diamètre contenant de l'eau à 30°C et exposée à une température extérieure de -10 °C nécessite jusqu'à 150mm d'isolant classique seul (soit un diamètre hors tout de 320 mm), là où 40 mm d'épaisseur de MCP suffisent largement (soit un diamètre hors tout de 100 mm). A noter que ces épaisseurs dépendent fortement du type d'isolant et du MCP choisis.

On notera que l'installation de chauffage (chauffage de locaux d'un bâtiment) peut être arrêtée, par exemple par coupure de l'alimentation électrique générale, ou bien elle peut être défaillante (mais en service) alors que l'alimentation électrique générale fonctionne.

Lorsque l'installation fonctionne normalement (en service et sans défaillance), son mode opératoire maintient une température et un débit d'eau dans l'installation qui sont suffisants pour éviter les conditions de gel de l'eau dans les composants de l'installation, même si le ou les systèmes de sécurité sont défaillants.

Lorsque l'installation redémarre ou lorsque le système de sécurité (système de protection conventionnel contre le gel) redevient opérationnel ou encore lorsque la température de la zone entourant le composant augmente au-delà du seuil de changement d'état, le matériau à changement de phase peut se liquéfier, ce qui permet de « recharger » ce dernier sans intervention spécifique au niveau du matériau. La protection contre le gel du composant de l'installation est alors de nouveau efficace. La « recharge » peut être réalisée un grand nombre de fois en apportant à chaque fois la même protection (robustesse). Cette « recharge » est effectuée rapidement en cas de remise en service de l'installation ou du système de sécurité et est plus longue lorsqu'elle est effectuée uniquement avec la remontée de la température du milieu ambiant.

Le système de sécurité « normal » (ou les systèmes de sécurité s'il y en plusieurs) s'enclenche en dessous d'un seuil de température (propre à chaque système ; par exemple une résistance régulée automatiquement sur la température) qui est supérieur au seuil de changement d'état du matériau à changement de phase. Ce seuil de changement d'état est supérieur à la température de solidification de l'eau. Par exemple, un premier système de sécurité a un seuil d'enclenchement supérieur à celui d'un deuxième système de sécurité qui, lui-même, est supérieur au seuil de changement d'état du matériau à changement de phase.

Selon d'autres caractéristiques possibles :
- par ailleurs, afin de retarder davantage le gel de l'eau dans l'installation, au moins une couche d'isolant thermique qui évite une solidification trop rapide du matériau à changement de phase est disposée entre le matériau à changement de phase et le milieu ambiant de la zone dans laquelle est installé ledit au moins un composant ; cette couche additionnelle (avantageusement extérieure) introduit ainsi un deuxième retard au phénomène du gel de l'eau dans l'installation ; le système de protection contre le gel comprend alors le matériau à changement de phase et l'isolant thermique additionnel ;
- ladite au moins une couche d'isolant thermique a une épaisseur qui est avantageusement inférieure à l'épaisseur de la couche d'isolant thermique qui serait nécessaire en l'absence de matériau à changement de phase pour retarder d'autant la survenue du gel; à titre d'exemple, une épaisseur d'isolant de 200 à 250 mm pourrait être nécessaire en l'absence de matériau à changement de phase pour éviter le gel; il s'ensuit un encombrement réduit pour l'ensemble formé par le matériau à changement de phase et ladite au moins une couche d'isolant thermique ainsi qu'un aspect visuel amélioré ; l'encombrement réduit s'avère particulièrement avantageux en cas d'installation hydraulique existante où l'isolation n'est pas prévue et les contraintes d'environnement exigeantes; la mise en place d'un tel ensemble à encombrement réduit est plus facile et moins coûteuse que celle d'un isolant épais tel que dans l'exemple ci-dessus ;
- l'épaisseur de l'ensemble formé par le matériau à changement de phase et ladite au moins une couche d'isolant thermique dépend notamment de la durée de la protection contre le gel (en France, une durée admise comme raisonnable est d'environ 60 h), de la température de l'eau avant que le système de sécurité ne devienne défaillant lorsque les conditions d'apparition du gel sont réunies et de la température de la zone exposée au gel dans laquelle ledit au moins un composant est situé ; à titre d'exemple, une épaisseur de cet ensemble peut avoisiner les 40 à 60 mm là où 200 à 250 mm d'isolant sont nécessaires en l'absence de matériau à changement de phase ;
- ledit au moins un composant de l'installation de chauffage est choisi parmi une canalisation ou une portion de canalisation, un contenant, un échangeur thermique, une vanne, un filtre, un corps de chauffe, une pompe, un vase d'expansion ;
- ledit au moins un composant de l'installation de chauffage est un échangeur thermique immergé dans un réservoir renfermant le matériau à changement de phase et qui est entouré d'au moins une couche d'isolant thermique optionnelle ; l'échangeur peut être de différents types (ex : à plaques, coaxial...) ;
- le matériau à changement de phase est à l'intérieur d'un contenant qui enveloppe au moins partiellement ledit au moins un composant et au moins une couche d'isolant thermique optionnelle entoure ledit contenant ;
- le contenant est une poche souple agencée autour dudit au moins un composant ;
- ladite au moins une couche d'isolant thermique forme une coque rigide autour du contenant ;
- ledit au moins un composant est une canalisation et le contenant entourant la canalisation forme avec cette dernière un double conduit ;
- le double conduit comprend une première paroi cylindrique renfermant l'eau et une deuxième paroi concentrique raccordée à la première paroi par des nervures radiales qui délimitent entre elles des segments annulaires renfermant le matériau à changement de phase ; un double conduit formé d'une seule pièce est ainsi plus simple à fabriquer et à mettre en œuvre ;
- le double conduit est fabriqué par extrusion, ce qui simplifie la fabrication et en diminue le coût ;
- le matériau à changement de phase est par exemple une huile synthétique ou une paraffine ayant une température de solidification comprise entre 2 et 10°C.

L'invention a également pour objet un procédé de fonctionnement d'une installation hydraulique de chauffage comprenant:
- au moins un composant contenant de l'eau ou dans lequel de l'eau est mise en circulation, ledit au moins un composant étant situé dans une zone susceptible d'être exposée au gel et étant hors sol ou disposé dans la zone cryotique du sol, ledit au moins un composant étant entouré au moins partiellement par un matériau à changement de phase ayant une température de solidification supérieure à celle de l'eau contenue dans ledit au moins un composant,
- au moins un système de sécurité fonctionnant à partir d'une alimentation électrique et qui est configuré pour s'enclencher et donc empêcher le gel de l'eau dans ledit au moins un composant lorsque la température de ladite zone est inférieure à un premier seuil de température prédéterminé,
selon le procédé, lorsque ledit au moins un système de sécurité est défaillant et l'installation est arrêtée ou défaillante et lorsque la température de ladite zone diminue pour devenir inférieure à un deuxième seuil de température prédéterminé qui est supérieur à la température de solidification de l'eau et inférieur ou égal à la température de solidification du matériau à changement de phase, ledit matériau à changement de phase se solidifie et l'énergie dégagée par ce changement d'état permet de retarder le gel de l'eau dans ledit au moins un composant pendant une durée qui dépend du matériau à changement de phase et de son épaisseur.

Selon ce procédé, trois conditions doivent être réunies pour que le matériau à changement de phase intervienne et joue son rôle de protection contre le gel vis-à-vis de l'air environnant le composant ou du sol environnant ce dernier : le système de sécurité doit être défaillant et l'installation de chauffage doit être arrêtée ou défaillante et la température du milieu environnant le composant doit diminuer en dessous d'un seuil prédéterminé. Si une seule ou deux seulement de ces conditions sont réunies le matériau à changement de phase n'intervient pas. C'est par exemple le cas si le système de sécurité est défaillant mais que la température du milieu environnant le composant reste au-dessus du seuil prédéterminé. C'est également le cas si la température du milieu environnant le composant diminue en dessous du seuil prédéterminé mais que le système de sécurité est activé et/ou que l'installation fonctionne (chauffage de bâtiment).

Selon une caractéristique possible, lorsque la température de ladite zone augmente au-delà de la température de solidification du matériau à changement de phase, ledit matériau à changement de phase se liquéfie et redevient ainsi opérationnel et donc de nouveau apte à protéger ledit au moins un composant contre le gel. On obtient ainsi un rechargement ou un réarmement naturel (c'est-à-dire sans intervention humaine) du système de protection contre le gel dudit au moins un composant de l'installation même si le système de sécurité reste défaillant ou que l'installation reste arrêtée. Il est ainsi par exemple envisageable que, par suite des montées en température et des chutes de température intervenant respectivement et successivement dans la journée et dans la nuit, le matériau à changement de phase joue son rôle de protection durant la nuit lorsque la température du milieu descend en dessous du seuil prédéterminé et se recharge durant la journée, en raison notamment de températures plus clémentes et par exemple d'un ensoleillement.

D'autres caractéristiques et avantages apparaitront au cours de la description qui va suivre, donnée uniquement à titre d'exemple non limitatif et faite en référence aux dessins annexés, sur lesquels :
- la figure 1A est une vue schématique en section transversale d'un composant selon un premier mode de réalisation de l'invention ;
- les figures 1B et 1C illustrent respectivement et de manière schématique l'allure de courbes d'évolution au cours du temps de la température de l'eau dans un tube sans matériau à changement de phase (1B) et avec matériau à changement de phase (1C) ;

- la figure 2 est une vue schématique en section transversale d'un composant selon un premier mode de réalisation de l'invention ;
- les figures 3 et 4 illustrent des éléments constitutifs du composant de la figure 2 ;
- la figure 5 illustre une configuration de composant à protéger contre le gel qui forme, avec le contenant du matériau à changement de phase, un double conduit ;
- les figures 6 à 9 représentent différentes configurations possibles d'échangeur thermique à protéger contre le gel ;
- les figures 10 à 12 représentent différentes configurations d'installations de chauffage dotées d'un composant à protéger du gel.

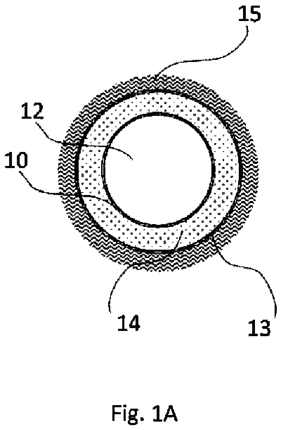

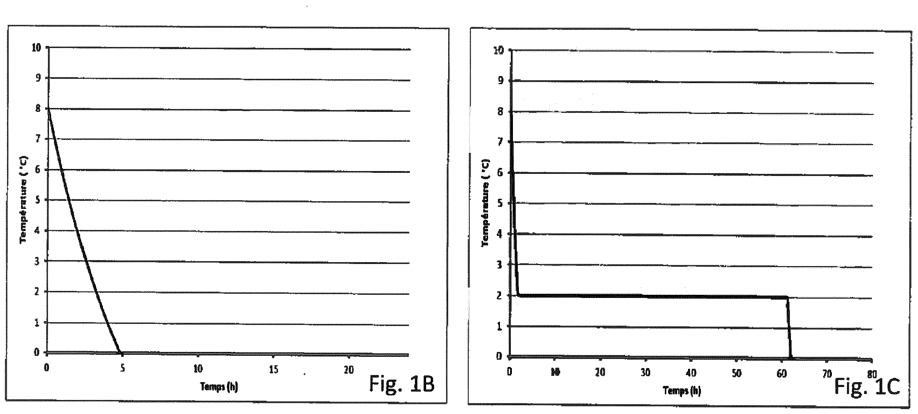

Comme représenté en section transversale à la figure 1A, un composant 10 d'une installation hydraulique de chauffage (par exemple d'un bâtiment) (non représentée) selon un premier mode de réalisation de l'invention est ici une canalisation ou portion de canalisation (tube ou conduit) dans laquelle de l'eau ou de l'eau additivée 12 est normalement mise en circulation lorsque l'installation est en service. La canalisation ou portion de canalisation s'étend perpendiculairement au plan de la Figure 1 dans l'installation et peut être horizontale, verticale, inclinée sur toute sa longueur ou sur une portion de sa longueur.

Ce composant 10 est situé entre deux parties de l'installation dans une zone de l'installation qui est susceptible d'être exposée au gel. Des exemples d'installation seront décrits ultérieurement. Toute l'installation n'est pas nécessairement susceptible d'être exposée au gel.

Le composant peut être disposé hors sol ou dans la zone cryotique du sol comme on le verra ultérieurement.

Le composant 10 est entouré, ici de manière complète (sur toute sa circonférence suivant une vue en section transversale), par un matériau ou fluide à changement de phase (MCP) qui possède une température de solidification supérieure à celle de l'eau contenue dans le composant 10. Le matériau à changement de phase qui forme une couche est contenu ici dans un tube ou conduit 13 qui entoure de manière concentrique le tube 10 et ce, sur une longueur qui correspond à la longueur du composant susceptible d'être soumise au gel. Il peut s'agir uniquement d'une portion du tube 10 et non du tube dans toute sa longueur. Le matériau à changement de phase 14 occupe ainsi l'espace annulaire entre les deux tubes 10 et 13.

Dans ce mode de réalisation, une couche extérieure d'isolant thermique 15 optionnelle entoure complètement le deuxième tube 13 (tube externe) sur la même longueur que celle précitée et est ainsi disposée entre le MCP et le milieu ambiant de la zone dans laquelle est installé le tube.

Le tube externe 13 peut être réalisé dans un matériau souple ou semi-souple afin d'absorber les variations dimensionnelles du MCP lors de sa solidification. A titre d'exemple, il peut être nécessaire de tenir compte d'une diminution de volume spécifique de 13% du MCP lors de sa solidification.

L'installation comprend également un système de sécurité (système de protection conventionnel contre le gel non représenté) qui a pour fonction, lorsque les conditions d'apparition du gel sont réunies (température de la zone susceptible d'être exposée au gel inférieure à un seuil de température prédéterminé et que l'installation est arrêtée), de chauffer l'eau (ex : résistance chauffante) ou de la faire circuler dans l'installation.

A titre d'exemple, le système de sécurité peut comprendre une ou plusieurs résistances électriques pour maintenir l'eau au-dessus de sa température de solidification de 0°C ou une pompe qui assure la circulation de l'eau dans les conduits ou canalisations.

Lorsque le système de sécurité est défaillant (ex : rupture d'alimentation électrique) et que les conditions de gel sont réunies la présence du MCP permet de retarder le gel de l'eau dans le composant 10. La présence de la couche d'isolant thermique 15 permet de retarder le moment où le MCP entre en action et donc de prolonger la protection contre le gel.

De manière avantageuse, la couche d'isolant thermique 15 autour du MCP a une épaisseur qui est inférieure à l'épaisseur qu'aurait une couche d'isolant thermique en l'absence de MCP afin de protéger le composant 10 contre le gel de façon quasi-identique en termes de performances. Ainsi, pour un tube de 40 mm de diamètre, en l'absence de MCP, une épaisseur d'isolant de 200 à 250 mm peut être nécessaire pour protéger le tube contre le gel pendant 60h (durée considérée comme suffisante en France pour des applications domestiques).

La présence du MCP permet de réduire considérablement l'épaisseur de l'isolant à quelques dizaines de millimètres.

On notera que le dimensionnement de l'épaisseur de l'ensemble (complexe) formé par le MCP 14 et la couche d'isolant thermique 15 dépend notamment des facteurs suivants :
- la durée de la protection contre le gel (par exemple 60h),
- la température de l'eau dans le tube 10 avant que le système de sécurité ne devienne défaillant lorsque les conditions d'apparition du gel sont réunies et
- la température de la zone exposée au gel dans laquelle le tube est situé (température de l'air extérieur ou du sol par exemple).

L'épaisseur de cet ensemble est par exemple comprise entre 40 et 60 mm, valeurs qui sont à comparer à l'épaisseur d'isolant nécessaire en l'absence de MCP (typiquement de l'ordre de 200 à 250 mm).

A titre d'exemple :
- le MCP peut être une paraffine ou une huile synthétique choisie pour son point de congélation supérieure à 0°C et compris entre 2 et 10°C, par exemple égal à 5°C, son comportement volumique lors de sa congélation qui consiste par exemple en une diminution légère de son volume et sa forte chaleur spécifique de liquéfaction par exemple de 250 kJ/kg ;
- l'isolant thermique peut être, par exemple, une mousse de polyuréthane expansée, du polyéthylène, du néoprène ou de la laine minérale ;
- le tube externe 13 peut être réalisé, par exemple, en polyéthylène haute densité ou en polyéthylène réticulé extrudé de faible épaisseur, par exemple de 3 mm ;
- le tube interne 10 peut être réalisé en métal, par exemple en cuivre ou encore en matière plastique tel que du polyéthylène haute densité ou encore du polyéthylène réticulé par exemple.

Suivant les performances recherchées, l'épaisseur de la couche de MCP 14 peut aller, à titre d'exemple, de 5 mm à 50mm. De même, la couche d'isolant externe 15, suivant les performances recherchées, peut aller de 5 mm à 50mm.

On notera que l'encombrement total généré par l'ensemble des deux couches est toutefois significativement réduit par rapport à l'encombrement total qui serait généré par la couche d'isolant thermique qui serait nécessaire en l'absence de MCP.

Les figures 1B et 1C sont des courbes comparatives traduisant l'évolution au cours du temps de la température de l'eau dans un tube sans MCP (fig. 1B) et avec MCP (fig. 1C) pour une même épaisseur totale d'isolation de 55 mm (épaisseur de l'isolant externe seul ou somme de l'épaisseur du MCP et de l'épaisseur de l'isolant externe).

Plus précisément :
- la courbe de la figure 1B a été obtenue avec un tube de cuivre de 40 mm de diamètre et de 2 mm d'épaisseur, entouré d'une couche d'isolant thermique en polyuréthane expansé de 55 mm d'épaisseur, avec une température initiale d'eau dans le tube de 8°C et une température d'air extérieur de -7°C ;
- la courbe de la figure 1C a été obtenue avec un tube de cuivre de 40 mm de diamètre et de 2 mm d'épaisseur, entouré de 20 mm de MCP et d'une couche d'isolant thermique de polyuréthane expansé de 35 mm d'épaisseur avec une température initiale d'eau dans le tube de 8°C et une température d'air extérieur de -7°C.

La comparaison des deux courbes montre clairement, à épaisseur d'isolant constante, l'effet retardateur de la présence du MCP avec le palier horizontal qui met à l'abri l'eau du tube de la congélation pendant environ 62h, là où, sur la figure 1B, le début de congélation de l'eau apparait au bout de 5h.

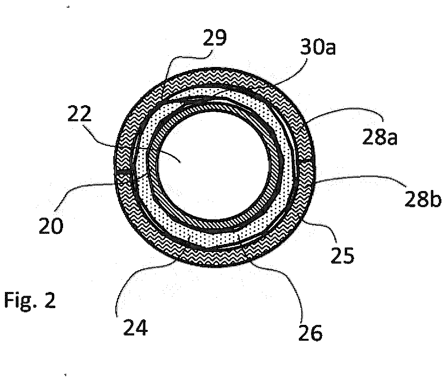

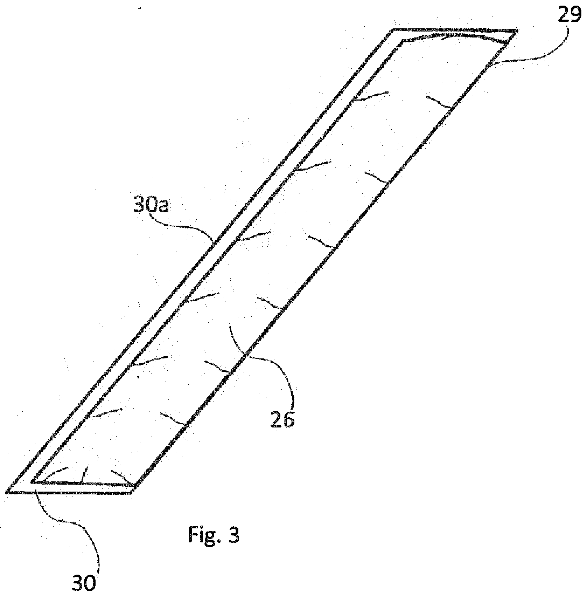

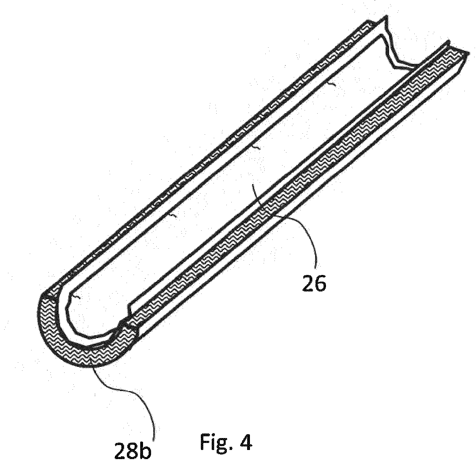

La figure 2 illustre un composant d'une installation hydraulique de chauffage (non représentée) selon un deuxième mode de réalisation selon l'invention. Les figures 3 et 4 illustrent des éléments constitutifs de ce com posant.

Le composant 20 est ici une canalisation ou portion de canalisation (tube ou conduit) dans laquelle de l'eau ou de l'eau additivée 22 est normalement mise en circulation lorsque l'installation est en service. La canalisation ou portion de canalisation s'étend perpendiculairement au plan de la Figure 2 dans l'installation et peut être horizontale, verticale, inclinée sur toute sa longueur ou sur une portion de sa longueur.

Ce composant 20 est situé entre deux parties de l'installation dans une zone de l'installation qui est susceptible d'être exposée au gel. Des exemples d'installation seront décrits ultérieurement. Toute l'installation n'est pas nécessairement susceptible d'être exposée au gel.

Le composant peut être disposé hors sol ou dans la zone cryotique du sol comme on le verra par la suite.

Le composant 20 est entouré, ici de manière complète (sur toute sa circonférence suivant une vue en section transversale), par un matériau à changement de phase 24 (MCP) qui possède une température de solidification supérieure à celle de l'eau 22 contenue dans le composant 20. Le MCP 24 est placé à l'intérieur d'un contenant qui enveloppe complètement le tube 20 sur une longueur prédéfinie, à savoir une longueur qui correspond à la longueur du tube qui est susceptible d'être soumise au gel. Il peut s'agir uniquement d'une portion du tube 20 et non du tube dans toute sa longueur.

Dans ce mode de réalisation, une couche extérieure d'isolant thermique 25 optionnelle entoure complètement le contenant renfermant le MCP 24 sur la même longueur que celle précitée et est ainsi disposée entre le MCP et le milieu ambiant de la zone dans laquelle est installé le tube.

Plus particulièrement, le contenant renfermant le MCP 24 est une poche souple 26 agencée autour du tube 20. La poche souple 26 est illustrée sur la figure 3 en position étalée sur un plan (non repliée/enroulée sur elle-même) tandis que, sur la figure 2, elle est enroulée autour du tube 20 afin de l'entourer complètement.

Comme représenté sur la figure 2, la poche 26 enroulée autour du tube 20 est elle-même enfermée à l'intérieur d'une coque rigide 28 qui représente une couche d'isolant thermique. La coque rigide 28 est par exemple formée de deux parties ou demi-coques 28a, 28b longitudinales assemblées l'une avec l'autre sur leur longueur par exemple par collage.

Plus particulièrement, la poche souple 26 peut être réalisée à partir d'une feuille ou film en matière plastique ayant une faible épaisseur au regard des dimensions de la feuille ou film (ex : épaisseur au plus égale à 1/10^{e} de l'une deux dimensions perpendiculaires à l'épaisseur). La feuille, plane à l'origine, est repliée sur elle-même suivant une ligne de pliure ou pli longitudinal 29 afin d'emprisonner entre les deux parties de la feuille qui sont en regard l'une de l'autre le MCP comme illustré sur la figure 3. Un bord périphérique 30 qui s'étend sur trois côtés de la feuille repliée (le quatrième côté est formé par le pli 29) correspond à la zone périphérique suivant laquelle les deux parties de la feuille en regard sont assemblées l'une avec l'autre par exemple par scellement (ex : collage ou soudage). La feuille ainsi repliée sur elle-même et fermée hermétiquement forme la poche souple 26.

Les deux bords longitudinaux opposés de la poche 26, à savoir le pli 29 et le bord opposé 30a (fig. 3) sont amenés en recouvrement lorsque la poche est enroulée autour du tube 20 comme illustré sur la figure 2 et fixés l'un à l'autre, par exemple par soudage ou collage.

Chaque demi-coque est ici un demi-cylindre dont les bords longitudinaux ou axiaux sont destinés à venir en correspondance avec ceux de l'autre demi-coque et à y être fixés par exemple par collage ou par tout autre moyen tel qu'un moyen mécanique. Les deux demi-coques emprisonnent ainsi la poche de MCP et la maintiennent autour du tube 20 et au contact de celui-ci.

La figure 4 illustre une variante dans laquelle la poche souple 26 est fixée à l'intérieur d'une des deux demi-coques isolantes, ici 28b, par exemple par collage. La poche peut également être collée à l'intérieur de l'autre demi-coque lorsque celle-ci sera mise en place.

Selon une autre variante non représentée, une poche souple renfermant un MCP (ex : une poche scellée telle qu'illustrée à la figure 3) peut être fixée, par exemple par collage, à l'intérieur de coques isolantes rigides de différentes formes qui sont aptes à permettre l'isolation de longueurs droites de tubes et de coudes de différents rayons.

Tout ce qui a été dit à propos du mode des figures 1A à 1C s'applique au deuxième mode et à ses variantes et ne sera donc pas répété. En particulier, les avantages exposés ci-dessus s'appliquent également à ce deuxième mode. Ce deuxième mode est en outre simple à fabriquer et d'un assemblage assez pratique. Les dimensions de la poche souple sont ajustées en fonction du diamètre du tube 20 et de la durée de la protection souhaitée (épaisseur du MCP). La coque possède également des dimensions adaptées et est simple à assembler à partir des deux demi-coques qui viennent maintenir la poche au contact du tube 20.

A titre d'exemple :
- le tube 20 est en métal, par exemple en cuivre, ou en matière plastique tel que du polyéthylène ;
- le MCP est une paraffine dont le point de congélation est de 5°C ;
- la poche souple est réalisée à partir d'une feuille de polyéthylène de 0,2 mm d'épaisseur ;
- les demi-coques sont en mousse de polyuréthane

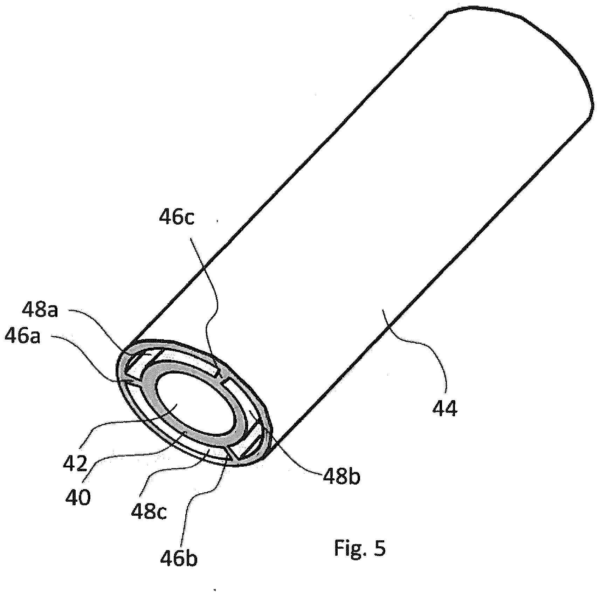

La figure 5 illustre un troisième mode de réalisation d'un composant d'une installation hydraulique de chauffage (non représentée).

Le composant 40 est ici une canalisation ou portion de canalisation (tube ou conduit) dans laquelle de l'eau ou de l'eau additivée 42 est normalement mise en circulation lorsque l'installation est en service. La canalisation ou portion de canalisation s'étend longitudinalement dans l'installation et peut être horizontale, verticale, inclinée sur toute sa longueur ou sur une portion de sa longueur.

Ce composant est situé entre deux parties de l'installation dans une zone de l'installation qui est susceptible d'être exposée au gel. Des exemples d'installation seront décrits ultérieurement. Toute l'installation n'est pas nécessairement susceptible d'être exposée au gel.

Le composant peut être disposé hors sol ou dans la zone cryotique du sol comme on le verra par la suite.

La canalisation ou portion de canalisation 40 est entourée par un contenant ou enveloppe ayant une forme générale de conduit 44. L'ensemble de la canalisation 40 et du conduit concentrique 44 forme un double conduit.

Plus particulièrement, le double conduit comprend une première paroi cylindrique de la canalisation 40 qui renferme l'eau et une deuxième paroi concentrique du conduit 44 raccordée à la première paroi par des nervures radiales 46a-c. Le nombre de nervures peut varier selon les configurations de double conduit. Les nervures espacées angulairement délimitent entre elles des segments ou passages annulaires 48a-c qui renferment le matériau à changement de phase (MCP). Le nombre de nervures impose le nombre de segments. Le double conduit est par exemple fabriqué par extrusion.

A titre d'exemple, l'ensemble du double conduit peut être un profilé plastique tel qu'un polyéthylène réticulé.

Le double conduit peut être entouré d'au moins une couche d'isolant thermique par exemple en mousse de polyuréthane.

Tout ce qui a été dit à propos du mode des figures 1A à 1C s'applique au troisième mode et à ses variantes et ne sera donc pas répété. En particulier, les avantages exposés ci-dessus s'appliquent également à ce troisième mode. Ce troisième mode est en outre simple à fabriquer puisque le double conduit est réalisé en une simple opération d'extrusion peu onéreuse. Des pièces non représentées servant à obturer les segments annulaires 48a-c sont en outre prévues aux deux extrémités opposées du double conduit afin de maintenir le MCP dans les segments.

A titre d'exemple de réalisation possible, dans le double conduit en polyéthylène réticulé :
- la canalisation intérieure 40 peut avoir un diamètre intérieur de 16mm et une épaisseur de paroi de 2 mm,
- la canalisation extérieure peut avoir un diamètre de 60 mm et une épaisseur de paroi de 2 mm,
- le diamètre externe total du double conduit est dans ce cas de 64 mm,
- les tubes 40 et 44 sont réunis par trois nervures de 2mm d'épaisseur et disposées tous les 120 degrés.

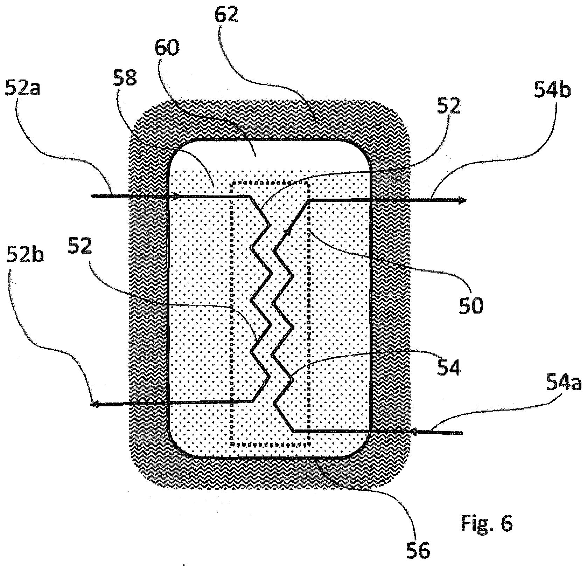

Les figures 6 à 9 illustrent d'autres modes de réalisation de composants d'installation de chauffage qui sont à protéger contre le gel lorsqu'ils sont installés dans une zone susceptible d'être exposée aux conditions de gel. Il s'agit sur ces figures de différents types d'échangeurs thermiques entourés chacun d'un matériau (ou fluide) à changement de phase (MCP) qui, lui-même, est isolé thermiquement du milieu ambiant de la zone susceptible d'être exposée au gel par au moins une couche d'isolant thermique.

Sur les figures 6 à 8, l'échangeur thermique est immergé dans un réservoir renfermant le MCP et qui est entouré d'au moins une couche d'isolant thermique.

Plus particulièrement, la figure 6 représente un schéma de principe d'un échangeur thermique qui est ici par exemple, un condenseur 50 et comprend un circuit primaire 52 et un circuit secondaire 54 qui sont situés à l'intérieur d'un réservoir 56 rempli d'un matériau ou fluide à changement de phase (MCP) 58. Le réservoir 56 comporte toutefois en partie haute un volume d'air 60 permettant d'absorber les variations de volume du MCP lors de ses changements d'état.

Le circuit primaire 52 comprend une entrée 52a et une sortie 52b de fluide primaire.

Le circuit secondaire comprend une entrée 54a et une sortie 54b de fluide secondaire qui peut être de l'eau.

Les entrées et sorties précitées traversent l'isolant, la paroi du réservoir et le MCP.

L'échangeur thermique est par exemple un échangeur coaxial couramment utilisé dans l'industrie et qui est ici immergé dans le MCP 58.

Le réservoir 56 est entouré d'une couche d'isolant thermique 62 qui peut être de la mousse de polyuréthane.

On notera que le réservoir 56 peut être réalisé en tôle d'acier ou en matière plastique telle que du polyéthylène, par exemple souple ou semi-rigide. Dans le cas où la matière plastique est apte à se déformer pour absorber les variations de volume du MCP lors de ses changements d'état, il n'est plus nécessaire de prévoir le volume d'air supérieur 60 précité.

Tout ce qui a été dit à propos du mode des figures 1A à 1C s'applique au mode qui vient d'être décrit et à ses variantes et ne sera donc pas répété. En particulier, les avantages exposés ci-dessus s'appliquent également à ce mode.

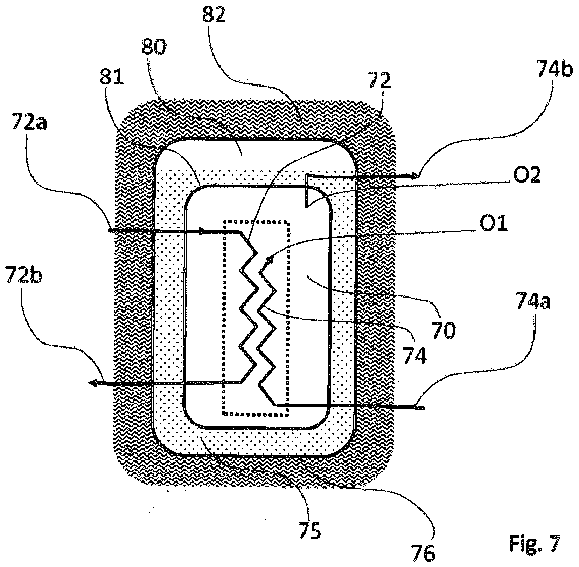

La figure 7 représente un schéma de principe d'un échangeur thermique qui est ici par exemple, un condenseur 70 et comprend un circuit primaire 72 et un circuit secondaire 74 qui sont situés à l'intérieur d'un réservoir 76 rempli d'un matériau ou fluide à changement de phase (MCP) 78. Le réservoir 76 comporte toutefois en partie haute un volume d'air 80 permettant d'absorber les variations de volume du MCP lors de ses changements d'état.

Le circuit primaire 72 comprend une entrée 72a et une sortie 72b de fluide primaire.

Le circuit secondaire comprend une entrée 74a et une sortie 74b de fluide secondaire qui peut être de l'eau.

L'échangeur thermique est ici confiné à l'intérieur d'une enceinte 81 qui contient du fluide du circuit secondaire (circuit de chauffage). Cette enceinte est immergée dans le MCP du réservoir.

Le circuit secondaire comprend plus particulièrement dans sa partie située entre l'entrée et la sortie et qui participe à l'échange thermique avec la partie correspondante du circuit primaire, un orifice O1 de sortie du fluide secondaire en jet libre dans l'enceinte 81. Le circuit secondaire comprend en outre un orifice O2 pour l'entrée, dans le tube de la sortie 74b, du fluide qui est présent dans l'enceinte 81.

Les entrées et sorties précitées traversent l'isolant, la paroi du réservoir, le MCP et la paroi de l'enceinte.

L'échangeur thermique est par exemple un échangeur coaxial couramment utilisé dans l'industrie.

Le réservoir 76 est entouré d'une couche d'isolant thermique 82 qui peut être de la mousse de polyuréthane.

On notera que le réservoir 76 peut être réalisé en tôle d'acier ou en matière plastique telle que du polyéthylène, par exemple souple ou semi-rigide. Dans le cas où la matière plastique est apte à se déformer pour absorber les variations de volume du MCP lors de ses changements d'état, il n'est plus nécessaire de prévoir le volume d'air supérieur 60 précité.

Tout ce qui a été dit à propos du mode des figures 1A à 1C s'applique au mode qui vient d'être décrit et à ses variantes et ne sera donc pas répété. En particulier, les avantages exposés ci-dessus s'appliquent également à ce mode.

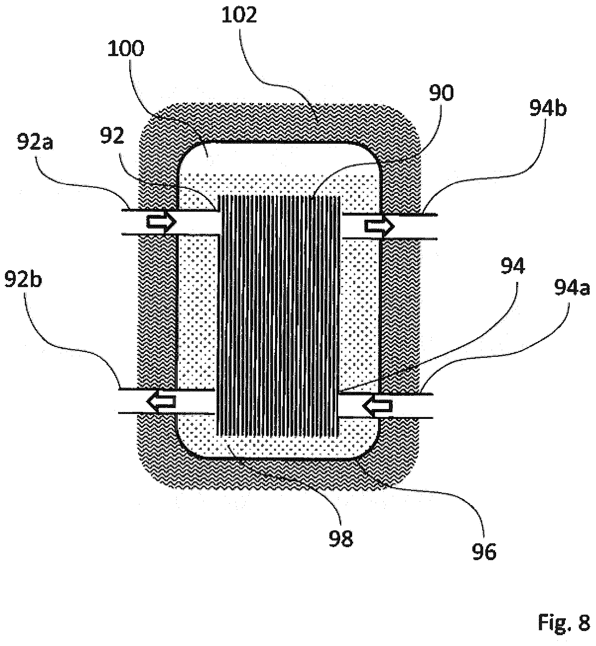

La figure 8 représente un schéma de principe d'un échangeur thermique qui est ici par exemple un condenseur 90 et comprend un circuit primaire 92 et un circuit secondaire 94 qui sont situés à l'intérieur d'un réservoir 96 rempli d'un matériau ou fluide à changement de phase (MCP) 98. Le réservoir 96 comporte toutefois en partie haute un volume d'air 100 permettant d'absorber les variations de volume du MCP lors de ses changements d'état.

Le circuit primaire 92 comprend une entrée 92a et une sortie 92b de fluide primaire.

Le circuit secondaire comprend une entrée 94a et une sortie 94b de fluide secondaire qui peut être de l'eau.

Les entrées et sorties précitées traversent l'isolant, la paroi du réservoir et le MCP.

L'échangeur thermique est par exemple un échangeur à plaques brasées couramment utilisé dans l'industrie et qui est ici immergé dans le MCP 98.

Le réservoir 96 est entouré d'une couche d'isolant thermique 102 qui peut être de la mousse de polyuréthane.

On notera que le réservoir 96 peut être réalisé en tôle d'acier ou en matière plastique telle que du polyéthylène, par exemple souple ou semi-rigide. Dans le cas où la matière plastique est apte à se déformer pour absorber les variations de volume du MCP lors de ses changements d'état, il n'est plus nécessaire de prévoir le volume d'air supérieur 100 précité.

Tout ce qui a été dit à propos du mode des figures 1A à 1C s'applique au mode qui vient d'être décrit et à ses variantes et ne sera donc pas répété. En particulier, les avantages exposés ci-dessus s'appliquent également à ce mode.

Les composants à protéger contre le gel peuvent être également des échangeurs thermiques non immergés.

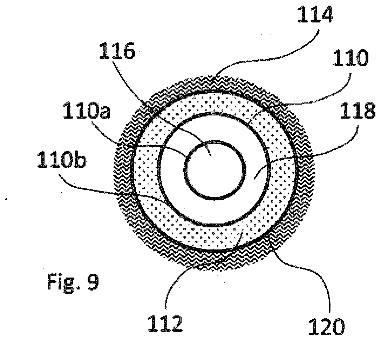

La figure 9 illustre un échangeur thermique coaxial 110, par exemple un condenseur, qui est enveloppé par une couche isolante de MCP 112, elle-même entourée d'au moins une couche d'isolant thermique 114 (ex : mousse de polyuréthane).

L'échangeur thermique coaxial 110 forme un double conduit qui comprend un premier conduit ou tube intérieur 110a dans lequel circule l'un des deux fluides de l'échangeur et un deuxième conduit ou tube extérieur 110b, entourant le premier conduit, coaxial avec ce dernier et dans lequel circule l'autre fluide de l'échangeur.

Le premier conduit 110a peut, soit faire partie du circuit primaire de l'échangeur et le deuxième conduit 110b fait alors partie du circuit secondaire, soit faire partie du circuit secondaire et le deuxième conduit 110b fait alors partie du circuit secondaire, selon les configurations d'échangeur retenues.

Le fluide 116 circulant dans le premier conduit 110a est soit un fluide primaire soit un fluide secondaire selon la nature du circuit dont fait partie le conduit. Il en est de même pour le fluide 118 du deuxième conduit 110b.

Un contenant 120, situé autour du conduit extérieur 110b de l'échangeur coaxial, renferme le MCP et est disposé entre la couche d'isolant 114 et le MCP. Plus particulièrement, le contenant 120 est généralement déformable pour s'adapter aux variations de volume du MCP comme déjà expliqué ci-dessus pour d'autres modes. Le contenant 120 s'étend perpendiculairement au plan de la section transversale de la figure 9 et gaine l'échangeur sur toute sa longueur ou sur une portion de celui-ci qui est susceptible d'être exposée au gel. Le contenant 120 est fermé à ses deux extrémités opposées pour maintenir renfermé le MCP. Le contenant 120 peut prendre la forme d'un conduit ou tube déformable, par exemple en matière plastique tel que du polyéthylène ou du polychlorure de vinyle.

Tout ce qui a été dit à propos du mode des figures 1A à 1C s'applique au mode qui vient d'être décrit et à ses variantes et ne sera donc pas répété. En particulier, les avantages exposés ci-dessus s'appliquent également à ce mode. Les caractéristiques et avantages des modes des figures 6 à 8 peuvent également s'appliquer à celui de la figure 9.

On notera que les échangeurs décrits dans les différents modes et variantes précités et ultérieurs peuvent alternativement être des évaporateurs ou d'autres types d'échangeurs contenant un liquide susceptible de geler. Lorsque plusieurs échangeurs sont prévus dans une installation, celle-ci peut comprendre différents types d'échangeurs.

Une même installation peut comprendre un ou plusieurs des composants précités.

On notera que le ou les composants à protéger du gel dans une installation de chauffage peuvent également être un contenant, une vanne, un filtre, un corps de chauffe, une pompe, un vase d'expansion... (différents types de composants)

De manière générale, une même installation hydraulique de chauffage peut comprendre un ou plusieurs des composants précités qui peuvent être d'un même type ou de plusieurs types différents choisis parmi ceux énumérés ci-dessus ainsi que ceux illustrés sur les figures qui ont été décrites.

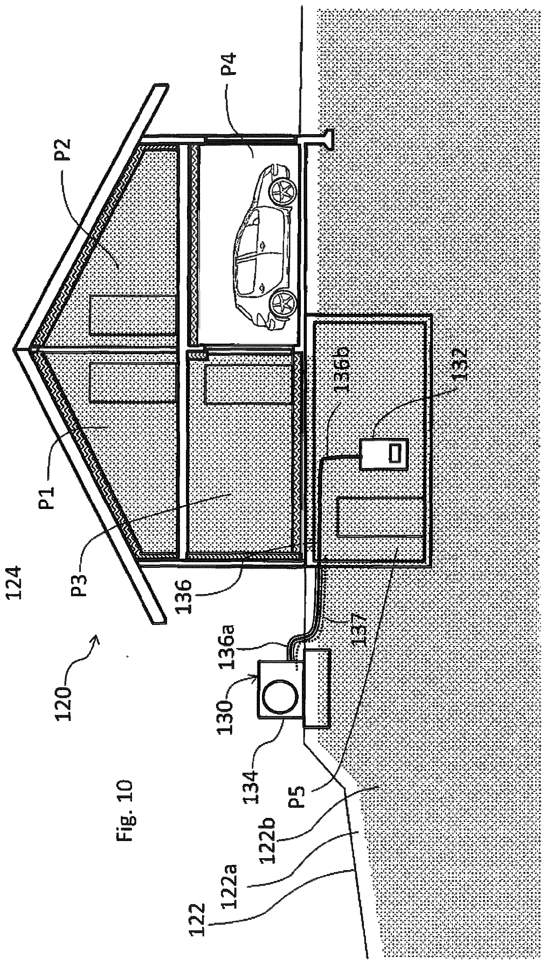

Les figures 10 à 12 illustrent des mises en situation d'installations hydrauliques de chauffage dont un composant est situé dans une zone susceptible d'être exposée au gel.

La figure 10 illustre un bâtiment 120 qui est bâti sur un sol 122 et dont une partie est située au-dessus du sol et une partie est enterrée.

Le sol 122 comporte une première partie 122a s'étendant sur une faible profondeur à partir de la surface en contact avec l'air ambiant (typiquement de l'ordre de quelques dizaines de centimètres) et qui est soumise au gel (zone cryotique hivernale) et une seconde partie 122b située en dessous et qui n'est pas exposée au gel (zone non cryotique ou hors gel). La partie du bâtiment située au-dessus du sol comporte plusieurs pièces ou locaux P1 à P3 isolés thermiquement et donc non susceptibles d'être exposés au gel ainsi qu'une pièce ou local P4 (ex : ici un garage) non isolé et qui est donc susceptible d'être exposé au gel.

La partie du bâtiment dans le sol comporte une pièce ou local P5 enterré (cave) et qui est situé dans la zone non cryotique ou hors gel 122b.

Le bâtiment est dans une zone extérieure 124 qui est susceptible d'être exposée au gel.

Le bâtiment 120 comporte une installation de chauffage 130 qui, ici, est plus particulièrement une installation de pompe à chaleur.

L'installation 130 comprend un module intérieur 132 placé dans le local P5, un module extérieur 134 situé dans la zone 124 susceptible d'être soumise au gel, une canalisation ou liaison hydraulique 136 reliant les deux modules et comprenant une première portion 136a qui est pour partie dans la zone 124 et pour partie dans la zone cryotique hivernale du sol 122a et une seconde portion 136b qui s'étend en zone hors gel, dans le local P5.

Le composant de l'installation qui est à protéger contre le gel est ici une portion de canalisation ou liaison hydraulique, à savoir la portion 136a.

L'installation est, à titre d'exemple, protégée normalement contre le gel par les systèmes suivants de sécurité ou de protection normale contre le gel :
- si l'installation de chauffage est en fonctionnement, la mise en route automatique de la pompe de l'installation de pompe à chaleur et éventuellement de celle-ci lorsque la température de l'eau contenue dans la liaison hydraulique 136 passe en dessous d'un seuil prédéterminé S1 (par exemple 8°C) ;
- si l'installation de chauffage est à l'arrêt (inoccupation ou défaillance) et optionnellement, une résistance électrique 137 (résistance traçante) qui court le long de la portion 136a de la liaison hydraulique et assure le maintien automatique de celle-ci au-dessus d'un seuil de température inférieur à S1 mais supérieur à 0°C, par exemple 6°C)

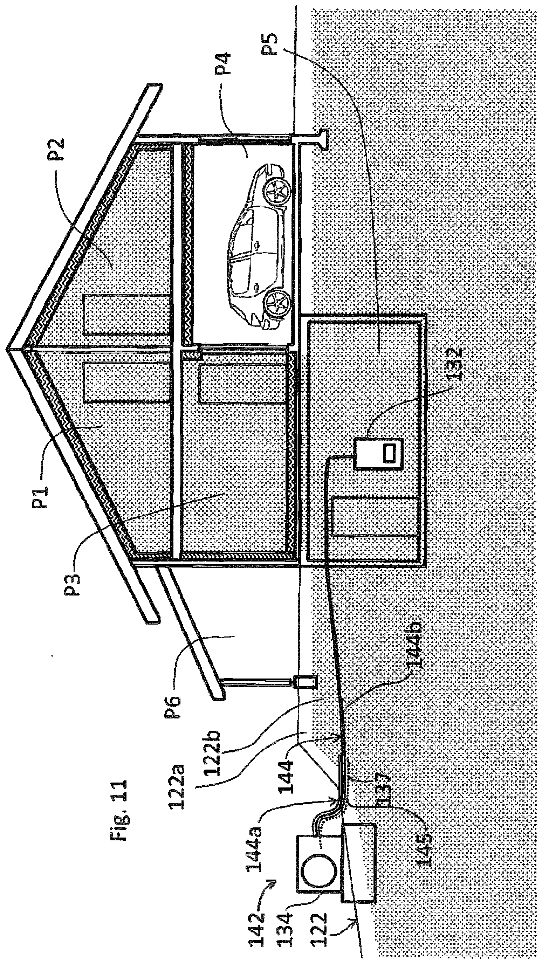

La figure 11 illustre un bâtiment 140 qui est bâti sur un sol 122 et dont une partie est située au-dessus du sol et une partie est enterrée. Les mêmes éléments que ceux de la figure 10 comportent les mêmes références et ne seront pas à nouveau décrits.

Le bâtiment 140 comporte une pièce ou local supplémentaire P6 non isolée et donc susceptible d'être soumise au gel.

L'installation de chauffage comprend une installation de pompe à chaleur 142 dont le module extérieur 134 est relié au module intérieur 132 par une canalisation ou liaison hydraulique 144 plus longue que celle de la figure 10.

La canalisation ou liaison hydraulique 144 comprend une première portion 144a qui est pour partie dans la zone 124 et pour partie dans la zone cryotique hivernale du sol 122a, une seconde portion 144b qui s'étend en zone hors gel, pour partie dans la zone non cryotique 122b du sol et pour partie dans le local P5.

Le composant de l'installation qui est à protéger contre le gel est ici une portion de canalisation ou liaison hydraulique, à savoir la portion 144a.

Les systèmes de sécurité ou de protection normale contre le gel peuvent être les mêmes que ceux décrits pour la figure 10, notamment la résistance régulée automatiquement 137.

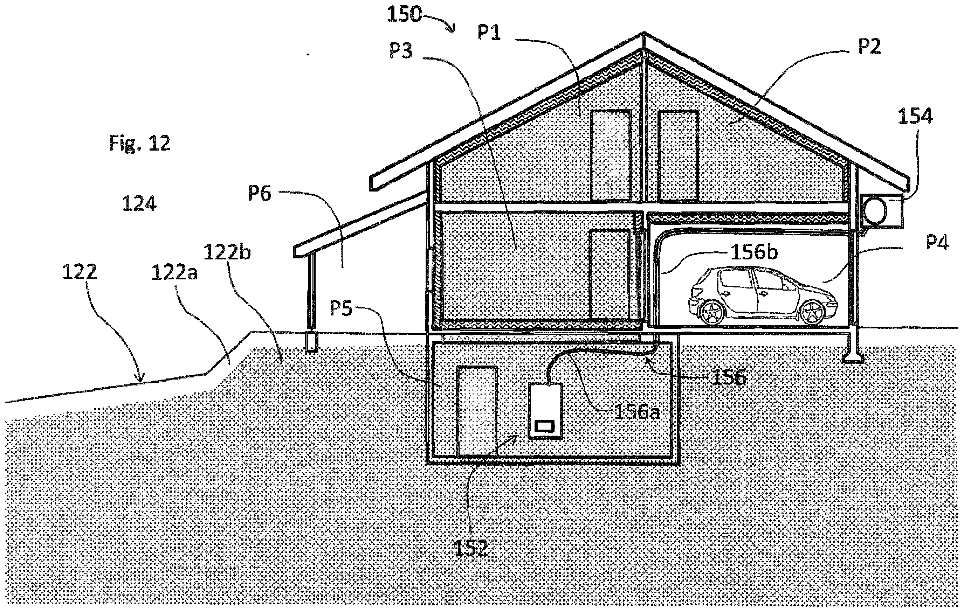

La figure 12 illustre un bâtiment 150 qui est bâti sur un sol 122 et dont une partie est située au-dessus du sol et une partie est enterrée. Les mêmes éléments que ceux des figures 10 et 11 comportent les mêmes références et ne seront pas à nouveau décrits.

L'installation de chauffage comprend une installation de pompe à chaleur 152 dont le module extérieur 154 est relié au module intérieur 132 par une canalisation ou liaison hydraulique 156 qui chemine à la fois dans le local P5 et dans le local P4 susceptible d'être exposé au gel en hiver.

La canalisation ou liaison hydraulique 156 comprend une première portion 156a qui s'étend dans le local P5 non soumis au gel et une seconde portion 156b qui s'étend dans le local P4.

Le composant de l'installation qui est à protéger contre le gel est ici une portion de canalisation ou liaison hydraulique, à savoir la portion 156b.

Dans ce dernier exemple, la résistance régulée automatiquement le long de la portion de liaison hydraulique 156b a été volontairement omise. Cette portion de liaison hydraulique 156b soumise aux aléas du gel est alors protégée, hors coupure accidentelle de courant, par la mise en route automatique de la pompe de circulation de la pompe à chaleur, voire par la mise en route de la pompe à chaleur elle-même si les conditions de température du milieu 150 l'exigent.

On notera que le système de protection contre le gel selon l'invention (MCP avec ou sans isolant externe) qui est appliqué aux composants à protéger des installations des figures 10 à 12 peut également être utilisé à l'intérieur du module extérieur de la pompe à chaleur des figures 10 à 12.

Sur les figures 10 à 12, il est patent que les portions de liaisons hydrauliques cheminant au sein de la zone non cryotique du sol ou en zone non soumise au gel ne nécessitent aucune protection particulière contre le gel. Pour cette raison, il est d'usage courant d'enterrer le plus possible les liaisons hydrauliques à une profondeur suffisante pour qu'elles soient effectivement le plus possible en zone non cryotique. La figure 11 illustre d'ailleurs ce type d'installation.

Cela présente un certain nombre d'inconvénients tels que :
- Le coût de terrassement ;
- La difficulté de réaliser un terrassement dans une zone déjà aménagée (voirie, jardins...) ;
- L'impossibilité de terrassement lors de la traversée de locaux soumis au risque de gel (garage, préaux...) lorsque l'installation intervient sur un bâtiment existant ;
- La difficulté d'accès aux tuyauteries constituant la liaison hydraulique pour inspection ou réparation lorsqu'elles sont enterrées profondément.
La solution proposée par l'invention permet alors d'avoir une installation hors sol sans avoir l'inconvénient d'une épaisseur d'isolant excessive sur tout ou partie du parcours de l'installation.

## Revendications

1. Installation hydraulique de chauffage comprenant:
- au moins un composant (10 ;136a) contenant de l'eau ou dans lequel de l'eau est mise en circulation, ledit au moins un composant étant situé dans une zone susceptible d'être exposée au gel et étant hors sol ou disposé dans la zone cryotique du sol,
- au moins un système de sécurité (137) fonctionnant à partir d'une alimentation électrique et qui est configuré pour s'enclencher et donc empêcher le gel de l'eau dans ledit au moins un composant lorsque la température de ladite zone est inférieure à un premier seuil de température prédéterminé,
**caractérisée en ce que** ledit au moins un composant (10 ;136a) est entouré au moins partiellement par un matériau à changement de phase (14) ayant une température de solidification supérieure à celle de l'eau contenue dans ledit au moins un composant de manière à retarder le gel de l'eau dans ledit au moins un composant, d'une part, lorsque la température de ladite zone est inférieure à un deuxième seuil de température prédéterminé qui est supérieur à la température de solidification de l'eau et inférieur ou égal à la température de solidification dudit matériau à changement de phase et, d'autre part, lorsque le système de sécurité est défaillant et lorsque l'installation est arrêtée ou défaillante.

2. Installation selon la revendication 1, **caractérisée en ce qu'**elle comporte au moins une couche d'isolant thermique (15) qui est disposée entre le matériau à changement de phase et le milieu ambiant de la zone dans laquelle est installé ledit au moins un composant.

3. Installation selon la revendication 2, **caractérisée en ce que** ladite au moins une couche d'isolant thermique (15) a une épaisseur qui est inférieure à l'épaisseur de la couche d'isolant thermique qui serait nécessaire en l'absence de matériau à changement de phase.

4. Installation selon l'une des revendications précédentes, **caractérisée en ce que** l'épaisseur de l'ensemble formé par le matériau à changement de phase et ladite au moins une couche d'isolant thermique dépend notamment de la durée de la protection contre le gel, de la température de l'eau avant que le système de sécurité ne devienne défaillant lorsque les conditions d'apparition du gel sont réunies et de la température de la zone exposée au gel dans laquelle ledit au moins un composant est situé.

5. Installation selon l'une des revendications précédentes, **caractérisée en ce que** ledit au moins un composant de l'installation de chauffage est choisi parmi une canalisation ou une portion de canalisation (136a), un contenant, un échangeur thermique (50), une vanne, un filtre, un corps de chauffe, une pompe, un vase d'expansion.

6. Installation selon la revendication 5, **caractérisée en ce que** ledit au moins un composant de l'installation de chauffage est un échangeur thermique (50) immergé dans un réservoir (56) renfermant le matériau à changement de phase (58) et qui est entouré d'au moins une couche d'isolant thermique optionnelle (62).

7. Installation selon l'une des revendications précédentes, **caractérisée en ce que** le matériau à changement de phase (24) est à l'intérieur d'un contenant (26) qui enveloppe au moins partiellement ledit au moins un composant (20) et au moins une couche optionnelle d'isolant thermique (25) entoure ledit contenant.

8. Installation selon la revendication 7, **caractérisée en ce que** le contenant est une poche souple (26) agencée autour dudit au moins un composant.

9. Installation selon la revendication 7 ou 8, **caractérisée en ce que** ladite au moins une couche d'isolant thermique forme une coque rigide (28a, 28b) autour du contenant.

10. Installation selon l'une des revendications 1 à 5, **caractérisée en ce que** ledit au moins un composant (40) est une canalisation et le contenant (44) entourant la canalisation forme avec cette dernière un double conduit.

11. Installation selon la revendication 10, **caractérisée en ce que** le double conduit comprend une première paroi cylindrique (40) renfermant l'eau et une deuxième paroi concentrique (44) raccordée à la première paroi par des nervures radiales (46a-c) qui délimitent entre elles des segments annulaires renfermant le matériau à changement de phase.

12. Installation selon la revendication 10 ou 11, **caractérisée en ce que** le double conduit est fabriqué par extrusion.

13. Installation selon l'une des revendications précédentes, **caractérisée en ce que** le matériau à changement de phase est une huile synthétique ou une paraffine ayant une température de solidification comprise entre 2 et 10°C.

14. Procédé de fonctionnement d'une installation hydraulique de chauffage comprenant:
- au moins un composant (10 ;136a) contenant de l'eau ou dans lequel de l'eau est mise en circulation, ledit au moins un composant étant situé dans une zone susceptible d'être exposée au gel et étant hors sol ou disposé dans la zone cryotique du sol, ledit au moins un composant (10 ;136a) étant entouré au moins partiellement par un matériau à changement de phase (14) ayant une température de solidification supérieure à celle de l'eau contenue dans ledit au moins un composant,
- au moins un système de sécurité (137) fonctionnant à partir d'une alimentation électrique et qui est configuré pour s'enclencher et donc empêcher le gel de l'eau dans ledit au moins un composant lorsque la température de ladite zone est inférieure à un premier seuil de température prédéterminé,
selon le procédé, lorsque ledit au moins un système de sécurité est défaillant et l'installation est arrêtée ou défaillante et lorsque la température de ladite zone diminue pour devenir inférieure à un deuxième seuil de température prédéterminé qui est supérieur à la température de solidification de l'eau et inférieur ou égal à la température de solidification du matériau à changement de phase, ledit matériau à changement de phase se solidifie et l'énergie dégagée par ce changement d'état permet de retarder le gel de l'eau dans ledit au moins un composant pendant une durée qui dépend du matériau à changement de phase et de son épaisseur.

15. Procédé selon la revendication 14, **caractérisé en ce que**, lorsque la température de ladite zone augmente au-delà de la température de solidification du matériau à changement de phase, ledit matériau à changement de phase se liquéfie et redevient ainsi opérationnel et donc de nouveau apte à protéger ledit au moins un composant contre le gel.

## Patentansprüche

1. Hydraulische Heizanordnung, umfassend:
- mindestens ein Bauteil (10; 136a), das Wasser enthält oder in dem Wasser zirkuliert, wobei sich das mindestens eine Bauteil in einem Bereich befindet, der Frost ausgesetzt sein könnte und außerhalb des Bodens oder in einem kryotischen Bereich des Bodens angeordnet ist,
- mindestens ein Sicherheitssystem (137), das auf der Basis einer elektrischen Versorgung arbeitet und das ausgelegt ist, sich einzuschalten und demzufolge zu verhindern, dass das Wasser in dem mindestens einen Bauteil gefriert, wenn die Temperatur des Bereichs unter einer vorher festgelegten ersten Temperaturgrenze liegt,
**dadurch gekennzeichnet, dass** das mindestens eine Bauteil (10; 136a) mindestens teilweise von einem Phasenwechselmaterial (14) umgeben ist, das eine Verfestigungstemperatur hat, die höher als die des Wassers ist, das in dem mindestens einen Bauteil enthalten ist, so dass das Gefrieren des Wassers in dem mindestens einen Bauteil zum einen verzögert wird, wenn die Temperatur des Bereichs unter einer vorher festgelegten zweiten Temperaturgrenze liegt, die höher als die Verfestigungstemperatur des Wassers und niedriger als die oder gleich der Verfestigungstemperatur des Phasenwechselmaterials ist und zum anderen, wenn das Sicherheitssystem defekt ist und wenn die Anordnung abgestellt oder defekt ist.

2. Anordnung nach Anspruch 1, **dadurch gekennzeichnet, dass** sie mindestens eine Wärmeisolationsschicht (15) aufweist, die zwischen dem Phasenwechselmaterial und dem Umfeld des Bereichs angeordnet ist, in dem das mindestens eine Bauteil angeordnet ist.

3. Anordnung nach Anspruch 2, **dadurch gekennzeichnet, dass** die mindestens eine Wärmeisolationsschicht (15) eine Dicke hat, die geringer als die Dicke der Wärmeisolationsschicht ist, die bei Abwesenheit des Phasenwechselmaterials notwendig wäre.

4. Anordnung nach einem der vorangehenden Ansprüche, **dadurch gekennzeichnet, dass** die Dicke der von dem Phasenwechselmaterial und der mindestens einen Wärmeisolationsschicht gebildeten Einheit insbesondere von der Dauer des Schutzes vor Gefrieren, von der Temperatur des Wassers vor dem Ausfall des Sicherheitssystems, wenn die Bedingungen für das Auftreten von Frost gegeben sind, und von der Temperatur des Frost ausgesetzten Bereichs abhängt, in dem sich das mindestens eine Bauteil befindet.

5. Anordnung nach einem der vorangehenden Ansprüche, **dadurch gekennzeichnet, dass** das mindestens eine Bauteil der Heizanordnung aus einer Kanalisation oder einem Kanalisationsbereich (136a), einem Behälter, einem Wärmetauscher (50), einem Ventil, einem Filter, einem Heizkörper, einer Pumpe, einem Ausgleichsbehälter ausgewählt ist.

6. Anordnung nach Anspruch 5, **dadurch gekennzeichnet, dass** das mindestens eine Bauteil der Heizanordnung ein Wärmetauscher (50) ist, der in einen Vorratsbehälter (56) eingetaucht ist, der das Phasenwechselmaterial (58) umgibt und der von mindestens einer optionalen Wärmeisolationsschicht (62) umgeben ist.

7. Anordnung nach einem der vorangehenden Ansprüche, **dadurch gekennzeichnet, dass** das Phasenwechselmaterial (24) im Inneren eines Behälters (26) ist, der mindestens teilweise das mindestens eine Bauteil (20) umgibt und mindestens eine optionale Wärmeisolationsschicht (25) den Behälter umgibt.

8. Anordnung nach Anspruch 7, **dadurch gekennzeichnet, dass** der Behälter ein flexibler Beutel (26) ist, der um das mindestens eine Bauteil eingerichtet ist.

9. Anordnung nach Anspruch 7 oder 8, **dadurch gekennzeichnet, dass** die mindestens eine Wärmeisolationsschicht eine starre Schale (28a, 28b) um den Behälter bildet.

10. Anordnung nach einem der Ansprüche 1 bis 5, **dadurch gekennzeichnet, dass** das mindestens eine Bauteil (40) eine Kanalisation ist und der Behälter (44), der die Kanalisation umgibt, mit dieser eine doppelte Leitung bildet.

11. Anordnung nach Anspruch 10, **dadurch gekennzeichnet, dass** die doppelte Leitung eine erste zylindrische Wand (40) umfasst, die das Wasser einschließt, und eine zweite konzentrische Wand (44), die mit der ersten Wand anhand von radialen Rippen (46a-c) verbunden ist, die zwischen sich ringförmige Segmente begrenzen, die das Phasenwechselmaterial einschließen.

12. Anordnung nach Anspruch 10 oder 11, **dadurch gekennzeichnet, dass** die doppelte Leitung durch Extrusion hergestellt ist.

13. Anordnung nach einem der vorangehenden Ansprüche, **dadurch gekennzeichnet, dass** das Phasenwechselmaterial ein synthetisches Öl oder ein Paraffin mit einer Verfestigungstemperatur zwischen 2 und 10 °C ist.

14. Verfahren zum Betrieb einer hydraulischen Heizanordnung, umfassend:
- mindestens ein Bauteil (10; 136a), das Wasser enthält oder in dem Wasser zirkuliert, wobei sich das mindestens eine Bauteil in einem Bereich befindet, der Frost ausgesetzt sein könnte und außerhalb des Bodens oder in einem kryotischen Bereich des Bodens angeordnet ist, wobei das mindestens eine Bauteil (10; 136a) mindestens teilweise von einem Phasenwechselmaterial (14) umgeben ist, das eine Verfestigungstemperatur hat, die höher als die des Wassers ist, das in dem mindestens einen Bauteil enthalten ist,
- mindestens ein Sicherheitssystem (137), das auf der Basis einer elektrischen Versorgung arbeitet und das ausgelegt ist, sich einzuschalten und demzufolge zu verhindern, dass das Wasser in dem mindestens einen Bauteil gefriert, wenn die Temperatur des Bereichs unter einer vorher festgelegten ersten Temperaturgrenze liegt,
wobei verfahrensgemäß, wenn das mindestens eine Sicherheitssystem ausfällt und die Anordnung angehalten ist oder ausfällt und wenn die Temperatur des Bereichs sinkt, um unter eine vorher festgelegte zweite Temperaturgrenze zu fallen, die höher als die Verfestigungstemperatur des Wassers und unter oder gleich der Verfestigungstemperatur des Phasenwechselmaterials ist, sich das Phasenwechselmaterial verfestigt und die durch diesen Zustandswechsel abgegebene Energie erlaubt, das Gefrieren des Wassers in dem mindestens einen Bauteil während einer Dauer zu verzögern, die von dem Phasenwechselmaterial und von seiner Dicke abhängt.

15. Verfahren nach Anspruch 14, **dadurch gekennzeichnet, dass**, wenn die Temperatur des Bereichs über die Verfestigungstemperatur des Phasenwechselmaterials steigt, sich das Phasenwechselmaterial verflüssigt und somit operativ wird und damit erneut imstande ist, das mindestens eine Bauteil vor Frost zu schützen.

## Claims

1. A hydraulic heating installation comprising:
- at least one component (10; 136a) containing water or in which water is circulated, said at least one component being located in a zone which may be exposed to freezing and which is aboveground or arranged in the cryotic zone of the soil,
- at least one security system (137) operating from a power supply and which is configured to be triggered and therefore to prevent freezing of the water in said at least one component when the temperature of said zone is below a first predetermined temperature threshold,
**characterized in that** said at least one component (10; 136a) is at least partially surrounded by a phase change material (14) having a solidification temperature higher than that of the water contained in said at least one component so as to delay the freezing of the water in said at least one component, on the one hand, when the temperature of said zone is below a second predetermined temperature threshold which is greater than the solidification temperature of the water and less than or equal to the solidification temperature of said phase change material, and on the other hand, when the security system has failed and when the installation is stopped or has failed.

2. The installation according to claim 1, **characterized in that** it includes at least one thermal insulating layer (15) which is arranged between the phase change material and the ambient environment of the zone in which said at least one component is installed.

3. The installation according to claim 2, **characterized in that** said at least one thermal insulating layer (15) has a thickness which is less than the thickness of the thermal insulating layer that would be necessary in the absence of phase change material.

4. The installation according to one of the preceding claims, **characterized in that** the thickness of the assembly formed by the phase change material and said at least one thermal insulating layer depends in particular on the duration of the protection against freezing, the temperature of the water before the security system fails when the conditions for the appearance of freezing are met and the temperature of the zone exposed to freezing in which said at least one component is located.

5. The installation according to one of the preceding claims, **characterized in that** said at least one component of the heating installation is chosen among a pipe or a pipe portion (136a), a container, a heat exchanger (50), a valve, a filter, a heating body, a pump, an expansion tank.

6. The installation according to claim 5, **characterized in that** said at least one component of the heating installation is a heat exchanger (50) submerged in a tank (56) containing the phase change material (58) and which is surrounded by at least one optional thermal insulating layer (62).

7. The installation according to one of the preceding claims, **characterized in that** the phase change material (24) is inside a container (26) which at least partially surrounds said at least one component (20) and at least one optional layer of thermal insulation (25) surrounds said container.

8. The installation according to claim 7, **characterized in that** the container is a flexible pouch (26) arranged around said at least one component.

9. The installation according to claim 7 or 8, **characterized in that** said at least one thermal insulating layer forms a rigid shell (28a, 28b) around the container.

10. The installation according to one of claims 1 to 5, **characterized in that** said at least one component (40) is a pipe and the container (44) surrounding the pipe forms a double conduit with the latter.

11. The installation according to claim 10, **characterized in that** the double conduit comprises a first cylindrical wall (40) containing the water and a second concentric wall (44) connected to the first wall by radial ribs (46a-c) which delimits annular segments between them containing the phase change material.

12. The installation according to claim 10 or 11, **characterized in that** the double conduit is manufactured by extrusion.

13. The installation according to one of the preceding claims, **characterized in that** the phase change material is a synthetic oil or a paraffin having a solidification temperature of between 2 and 10°C.

14. An operating method of a hydraulic heating installation comprising:
- at least one component (10; 136a) containing water or in which water is circulated, said at least one component being located in a zone which may be exposed to freezing and which is aboveground or arranged in the cryotic zone of the soil, said at least one component (10; 136a) being surrounded at least partially by a phase change material (14) having a solidification temperature higher than that of the water contained in said at least one component,
- at least one security system (137) operating from a power supply and which is configured to be triggered and therefore to prevent the freezing of the water in said at least one component when the temperature of said zone is below a first predetermined temperature threshold,
according to the method, when said at least one security system fails and the installation is stopped or has failed and when the temperature of said zone decreases to become lower than the second predetermined temperature threshold which is greater than the solidification temperature of the water and less than or equal to the solidification temperature of the phase change material, said phase change material solidifies and the energy given off by this state change makes it possible to delay the freezing of the water in said at least one component for a duration which depends on the phase change material and its thickness.

15. The method according to claim 14, **characterized in that**, when the temperature of said zone increases beyond the solidification temperature of the phase change material, said phase change material liquefies and thus becomes operational again and therefore once again able to protect said at least one component against freezing.
